# FASCICULE DE BREVET EUROPEEN

(11) **EP 1 716 706 B1**
(45) Date de publication et mention de la délivrance du brevet: **23.07.2014**
(21) Numéro de dépôt: 05728113.1
(22) Date de dépôt: 17.02.2005
(51) Int. Cl.: H04N 21/418

(54) **PROCEDE D'APPARIEMENT D'UN TERMINAL RECEPTEUR AVEC UNE PLURALITE DE CARTES DE CONTROLE D'ACCES**
VERFAHREN ZUM ANPASSEN EINES EMPFÄNGERENDGERÄTS AN EINE ANZAHL VON ZUGANGSREGELUNGSKARTEN
METHOD FOR MATCHING A RECEIVER TERMINAL TO A NUMBER OF ACCESS CONTROL CARDS

(30) Priorité: 20.02.2004 FR 0450323
(43) Date de publication de la demande: 02.11.2006
(73) Titulaire: Viaccess, 92057 Paris La Defense (FR)
(72) Inventeur: BEUN, Frédéric, F-78400 CHATOU (FR); BOUDIER, Laurence, F-78400 CHATOU (FR); ROQUE, Pierre, F-75011 PARIS (FR); TRONEL, Bruno, F-92800 PUTEAUX (FR)
(74) Mandataire: Ahner, Philippe
(86) Numéro de dépôt international: PCT/FR2005/050101
(87) Numéro de publication internationale: WO 2005/081525

(56) Documents cités:
- WO-A-99/57901
- KANJANARIN W ET AL: "Scrambling and key distribution scheme for digital television" ., 10 octobre 2001 (2001-10-10), pages 140-145, XP010565513

## Description

### DOMAINE TECHNIQUE

L'invention se situe dans le domaine de la sécurisation de données numériques diffusées et des équipements récepteurs destinés à recevoir ces données dans un réseau de distribution de données et/ou services et se rapporte plus spécifiquement à un procédé d'appariement d'un équipement récepteur de données numériques avec une pluralité de modules externes de sécurité ayant chacun un identifiant unique.

### ÉTAT DE LA TECHNIQUE ANTÉRIEURE

De plus en plus d'opérateurs offrent des données et services en ligne accessibles au moyen de terminaux munis de processeurs de sécurité. Généralement, les données et services distribués sont embrouillés à l'émission par des clés secrètes et désembrouillés à la réception par les mêmes clés secrètes préalablement mises à la disposition de l'abonné.

Outre les techniques classiques de contrôle d'accès basées sur l'embrouillage à l'émission et le désembrouillage à la réception des données distribuées, les opérateurs proposent des techniques basées sur l'appariement du terminal de réception avec un processeur de sécurité pour éviter que les données et services distribués ne soient accessibles à des utilisateurs muni d'un terminal volé ou d'un processeur de sécurité piraté tel que par exemple une carte à puce falsifiée.

Le document WO 99/57901 décrit un mécanisme d'appariement entre un récepteur et un module de sécurité basé, d'une part, sur le chiffrement et le déchiffrement des informations échangées entre le récepteur et le module de sécurité par une clé unique stockée dans le récepteur ou dans le module de sécurité, et d'autre part, sur la présence d'un numéro de récepteur dans le module de sécurité.

Un inconvénient de cette technique provient du fait que l'association entre un récepteur et un module de sécurité qui lui est apparié est établie a priori, et qu'elle ne permet pas à l'opérateur de gérer efficacement son parc d'équipements récepteurs afin d'empêcher le détournement de cet équipement pour des utilisations frauduleuses.

Un but du procédé d'appariement selon l'invention est de permettre à chaque opérateur de limiter les utilisations de son parc de matériel de réception en configurant et en contrôlant dynamiquement l'appariement de l'équipement récepteur et des modules externes de sécurité destinés à coopérer avec cet équipement.

### EXPOSÉ DE L'INVENTION

L'invention préconise un procédé d'appariement d'un équipement récepteur de données numériques avec une pluralité de modules externes de sécurité ayant chacun un identifiant unique.

Le procédé selon l'invention comporte les étapes suivantes :
- connecter un module externe de sécurité à l'équipement récepteur,
- mémoriser à la volée dans l'équipement récepteur l'identifiant unique du module de sécurité connecté.

Ce procédé comporte une phase de contrôle consistant à vérifier, à chaque connexion ultérieure d'un module externe de sécurité à l'équipement récepteur, si l'identifiant dudit module est mémorisé dans cet équipement récepteur.

A cet effet, le procédé selon l'invention comporte en outre une étape consistant à transmettre à l'équipement récepteur une signalisation comportant au moins un message de gestion de la mémorisation de l'identifiant du module externe de sécurité et/ou un message de gestion de la phase de contrôle.

Ladite signalisation comporte au moins une des consignes suivantes :
- autoriser la mémorisation,
- interdire la mémorisation,
- effacer les identifiants déjà mémorisés dans l'équipement récepteur,
- activer ou désactiver la phase de contrôle.

Dans une première variante de mise en oeuvre du procédé, la signalisation comporte le nombre maximal d'identifiants dont la mémorisation est autorisée.

Dans une deuxième variante de mise en oeuvre du procédé, ladite signalisation comporte une consigne de reconfiguration par laquelle on transmet à l'équipement récepteur une liste mise à jour des identifiants des modules externes de sécurité appariés avec ledit équipement récepteur.

Ladite liste est transmise soit directement à l'équipement récepteur, soit via un module externe de sécurité connecté audit équipement récepteur.

Préférentiellement, ladite phase de contrôle comporte une procédure consistant à perturber le traitement des données si l'identifiant du module externe de sécurité connecté n'est pas préalablement mémorisé dans l'équipement récepteur.

Le procédé selon l'invention s'applique lorsque les données sont distribuées en clair et également lorsque ces données sont distribuées sous forme embrouillée par un mot de contrôle chiffré. Dans ce dernier cas, chaque module externe de sécurité comporte des droits d'accès auxdites données et un algorithme de déchiffrement dudit mot de contrôle pour désembrouiller les données.

La signalisation de contrôle est transmise dans un message EMM (Entitlement Management Message, en anglais) spécifique à un module externe de sécurité associé à cet équipement récepteur ou dans un message EMM spécifique à cet équipement récepteur, et pour un équipement récepteur donné, la liste mise à jour des identifiants des modules externes de sécurité appariés avec cet équipement récepteur est également transmise dans un message EMM spécifique à un module de sécurité associé à cet équipement récepteur.

Alternativement, ladite signalisation est transmise dans un flux privé à un groupe d'équipements récepteurs, et la liste mise à jour des identifiants des modules externes est également transmise dans un flux privé à chaque équipement récepteur. Dans ce dernier cas, ledit flux privé est traité par un logiciel dédié exécutable dans chaque équipement récepteur en fonction de l'identifiant du module externe de sécurité qui lui est associé.

Dans une autre variante, la signalisation est transmise à un groupe d'équipements récepteurs dans un message EMM spécifique à un groupe de modules externes de sécurité associés auxdits équipements récepteurs ou dans un message EMM spécifique audit groupe d'équipements récepteurs, et pour un groupe d'équipements récepteurs donné, la liste mise à jour des identifiants des modules externes est transmise dans un message EMM spécifique à un groupe de modules externes de sécurité associés auxdits équipements récepteurs.

Par ailleurs, pour un groupe d'équipements récepteurs donné, la signalisation de contrôle et la liste mise à jour peuvent également être transmises à un groupe d'équipements dans un flux privé.

Dans ce cas, ledit flux privé est traité par un logiciel dédié exécutable dans chaque équipement récepteur en fonction de l'identifiant du module externe de sécurité qui lui est associé.

Lorsque la transmission de la signalisation et des listes mises à jour est effectuée par des EMM, le procédé comporte un mécanisme destiné à empêcher l'utilisation d'un EMM transmis à un même module de sécurité dans deux équipements récepteurs distincts.

Les EMM spécifiques à un module de sécurité ou à un équipement récepteur présentent le format suivant :

| | |
|---|---|
| EMM-U_section() { | |
| table_id = 0x88 | 8 bits |
| section_syntax_indicator = 0 | 1 bit |
| DVB_reserved | 1 bit |
| ISO_reserved | 2 bits |
| EMM-U_section_length | 12 bits |
| unique_adress_field | 40 bits |
| for (1=0; i<N; i++) { | |
| EMM_data_byte | 8 bits |
| } | |
| } | |

Les EMM spécifiques à tous les modules externes de sécurité ou à tous les équipements récepteurs présentent le format suivant :

| | |
|---|---|
| EMM-G_section() { | |
| table_id = 0x8A ou 0x8B | 8 bits |
| section_syntax_indicator = 0 | 1 bit |
| DVB_reserved | 1 bit |
| ISO_reserved | 2 bits |
| EMM-G_section_length | 12 bits |
| for (i=0; i<N; i++) { | |
| EMM_data_byte | 8 bits |
| } | |
| } | |

Les EMM spécifiques à un sous-groupe de modules externes de sécurité ou à un sous-groupe d'équipements récepteurs présentent le format suivant :

| | |
|---|---|
| EMM-S_section() { | |
| table_id = 0x8E | 8 bits |
| section_syntax_indicator = 0 | 1 bit |
| DVB_reserved | 1 bit |
| ISO_reserved | 2 bits |
| EMM-S_section_length | 12 bits |
| shared_address_field | 24 bits |
| reserved | 6 bits |
| data_format | 1 bit |
| ADF_scrambling_flag | 1 bit |
| for (i=0; i<N; i++) { | |
| EMM_data_byte | 8 bits |
| } | |
| } | |

Selon une caractéristique supplémentaire, les identifiants de modules de sécurité sont groupés dans une liste chiffrée.

Le procédé peut être utilisé dans une première architecture dans laquelle l'équipement récepteur comporte un décodeur et le module de sécurité comporte une carte de contrôle d'accès dans laquelle sont mémorisées des informations relatives aux droits d'accès d'un abonné à des données numériques distribuées par un opérateur.

Dans cette architecture, l'appariement est effectué entre le décodeur et la carte de contrôle d'accès.

Le procédé peut être utilisé dans une deuxième architecture dans laquelle l'équipement récepteur comporte un décodeur et le module de sécurité comporte une interface de sécurité amovible munie d'une mémoire non volatile et destinée à coopérer, d'une part, avec le décodeur, et d'autre part, avec une pluralité de cartes de contrôle d'accès conditionnel pour gérer l'accès à des données numériques distribuées par un opérateur.

Dans cette architecture, l'appariement est effectué entre ledit décodeur et ladite interface de sécurité amovible.

Le procédé peut être utilisé dans une troisième architecture dans laquelle l'équipement récepteur comporte un décodeur muni d'une interface de sécurité amovible ayant une mémoire non volatile et destinée à coopérer, d'une part, avec ledit décodeur, et d'autre part, avec une pluralité de cartes de contrôle d'accès conditionnel.

Dans cette architecture, l'appariement est réalisé entre ladite interface de sécurité amovible et lesdites cartes de contrôle d'accès.

Dans une application particulière du procédé selon l'invention, les données sont des programmes audiovisuels.

Le procédé selon l'invention est mis en oeuvre dans un système comportant une pluralité d'équipements récepteurs connectés à un réseau de diffusion de données et/ou services, chaque équipement récepteur étant susceptible d'être apparié avec une pluralité de modules externes de sécurité, ce système comportant également une plateforme de gestion commerciale communiquant avec lesdits équipements récepteurs et avec lesdits modules externes de sécurité. Ce système comporte en outre :
- un premier module agencé dans ladite plate-forme de gestion commerciale et destiné à générer des requêtes d'appariement,
- et un deuxième module agencé dans lesdits équipements récepteurs et destiné à traiter lesdites requêtes pour préparer une configuration de l'appariement et pour contrôler cet appariement.

L'invention concerne également un équipement récepteur susceptible d'être apparié avec une pluralité de modules externes de sécurité pour gérer l'accès à des données numériques distribuées par un opérateur.

Selon l'invention, cet équipement comporte des moyens pour mémoriser à la volée l'identifiant de chaque module externe de sécurité qui lui est connecté.

Dans un premier mode de réalisation, l'équipement récepteur comporte un décodeur et le module externe de sécurité est une carte de contrôle d'accès comportant des informations relatives aux droits d'accès d'un abonné auxdites données numériques, l'appariement étant effectué entre ledit décodeur et ladite carte.

Dans un deuxième mode de réalisation, l'équipement comporte un décodeur et le module externe de sécurité est une interface de sécurité amovible munie d'une mémoire non volatile et destinée à coopérer, d'une part, avec ledit décodeur, et d'autre part, avec une pluralité de cartes de contrôle d'accès conditionnel, pour gérer l'accès auxdites données numériques, l'appariement étant effectué entre ledit décodeur et ladite interface de sécurité amovible.

Dans un troisième mode de réalisation, l'équipement comporte un décodeur muni d'une interface de sécurité amovible ayant une mémoire non volatile et destinée à coopérer, d'une part, avec ledit décodeur, et d'autre part, avec une pluralité de cartes de contrôle d'accès conditionnel et l'appariement est réalisé entre ladite interface de sécurité amovible et lesdites cartes de contrôle d'accès.

L'invention concerne également un décodeur susceptible de coopérer avec une pluralité de modules externes de sécurité pour gérer l'accès à des programmes audiovisuels distribués par un opérateur, chaque module externe de sécurité ayant un identifiant unique et comportant au moins un algorithme de traitement de données.

Le décodeur selon l'invention comporte des moyens pour mémoriser à la volée l'identifiant de chaque module externe de sécurité qui lui est connecté.

Dans un premier mode de réalisation, lesdits modules externes de sécurité sont des cartes de contrôle d'accès dans lesquelles sont mémorisées des informations relatives aux droits d'accès d'un abonné à des données numériques distribuées par un opérateur.

Dans un deuxième mode de réalisation, lesdits modules externes de sécurité sont des interfaces de sécurité amovibles comportant une mémoire non volatile et destinées à coopérer, d'une part, avec le décodeur, et d'autre part, avec une pluralité de cartes de contrôle d'accès conditionnel pour gérer l'accès à des données numériques distribuées par un opérateur.

L'invention concerne également une interface de sécurité amovible comportant une mémoire non volatile et destinée à coopérer, d'une part, avec un équipement récepteur, et d'autre part, avec une pluralité de cartes de contrôle d'accès conditionnel, pour gérer l'accès à des données numériques distribuées par un opérateur, chaque carte ayant un identifiant unique et comportant des informations relatives aux droits d'accès d'un abonné auxdites données numériques.

L'interface selon l'invention comporte des moyens pour enregistrer à la volée l'identifiant de chaque carte de contrôle d'accès dans ladite mémoire non volatile.

Dans une première variante, cette interface est une carte PCMCIA (pour Personal Computer Memory Card International Association) comportant un logiciel de désembrouillage de données numériques.

Dans une deuxième variante, cette interface est un module logiciel qui peut être exécuté soit dans l'équipement récepteur soit dans le module externe de sécurité.

L'invention concerne en outre un programme d'ordinateur exécutable dans un équipement récepteur susceptible de coopérer avec une pluralité de modules externes de sécurité ayant chacun un identifiant unique et dans lesquels sont stockées des informations relatives aux droits d'accès d'un abonné à des données numériques distribuées par un opérateur.

Ce programme d'ordinateur comporte des instructions pour mémoriser à la volée l'identifiant de chaque module externe de sécurité connecté audit équipement récepteur et des instructions destinées à générer localement des paramètres de contrôle de l'appariement de l'équipement récepteur avec un module externe de sécurité en fonction d'une signalisation transmise audit équipement récepteur par l'opérateur.

Ce Programme d'ordinateur comporte en outre des instructions destinées à vérifier, à chaque utilisation ultérieure d'un module externe de sécurité avec l'équipement récepteur, si l'identifiant dudit module externe de sécurité est mémorisé dans l'équipement récepteur.

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- la figure 1 représente une première architecture pour la mise en oeuvre de l'appariement selon l'invention,
- la figure 2 représente une deuxième architecture pour la mise en oeuvre de l'appariement selon l'invention,
- la figure 3 représente une troisième architecture pour la mise en oeuvre de l'appariement selon l'invention,
- la figure 4 représente la structure des messages EMM de configuration et d'utilisation des fonctionnalités d'appariement selon l'invention
- la figure 5 représente un diagramme d'état de la fonction d'appariement selon l'invention,
- la figure 6 représente un organigramme illustrant un mode particulier de mise en oeuvre de l'appariement selon l'invention.

### EXPOSÉ DÉTAILLÉ DE MODES DE RÉALISATION PARTICULIERS

L'invention va maintenant être décrite dans le cadre d'une application dans laquelle un opérateur diffusant des programmes audiovisuels met en oeuvre le procédé selon l'invention pour limiter l'utilisation de son parc d'équipements récepteurs à ses propres abonnés.

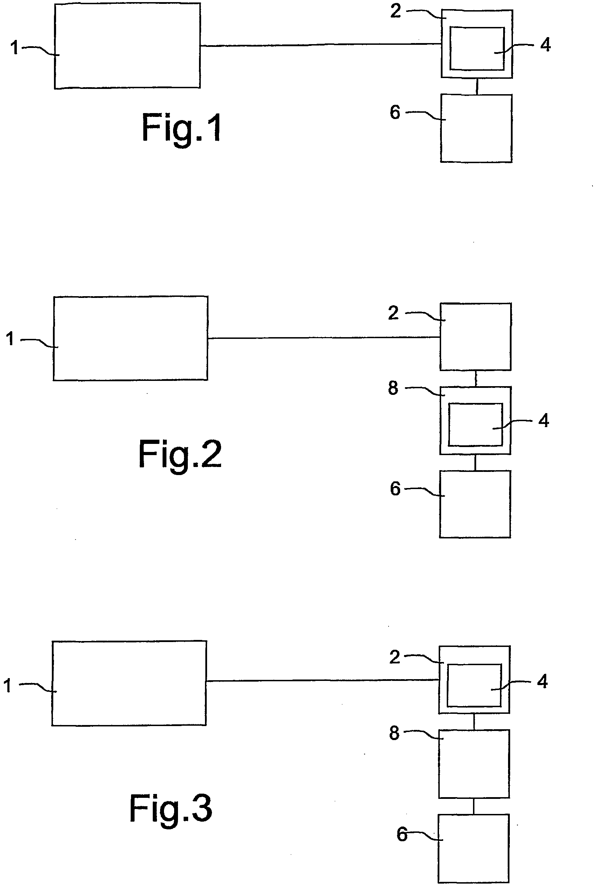

Le procédé peut être mis en oeuvre dans trois architectures distinctes illustrées respectivement par les figures 1, 2 et 3. Les éléments identiques dans ces trois architectures seront désignés par des références identiques.

La gestion de l'appariement est réalisée à partir d'une plateforme commerciale 1 contrôlée par l'opérateur et communiquant avec l'équipement récepteur installé chez l'abonné.

Dans la première architecture, illustrée par la figure 1, l'équipement récepteur comporte un décodeur 2 dans lequel est installé un logiciel de contrôle d'accès 4, et le module externe de sécurité est une carte de contrôle d'accès 6 comportant des informations relatives aux droits d'accès d'un abonné aux programmes audiovisuels diffusés. Dans ce cas, l'appariement est effectué entre le décodeur 2 et ladite carte 6.

Dans la deuxième architecture illustrée par la figure 2, l'équipement récepteur comporte un décodeur 2, non dédié au contrôle d'accès, et le module externe de sécurité est une interface de sécurité amovible 8 munie d'une mémoire non volatile et dans laquelle est installé le logiciel de contrôle d'accès 4. Cette interface 8 coopère, d'une part, avec ledit décodeur 2, et d'autre part, avec une carte 6 parmi une pluralité de cartes de contrôle d'accès conditionnel, pour gérer l'accès auxdits programmes audiovisuels.

Dans cette architecture, l'appariement est réalisé entre ladite interface de sécurité amovible 8 et ladite carte de contrôle d'accès 6.

Dans la troisième architecture, illustrée par la figure 3, l'équipement récepteur comporte un décodeur 2 dans lequel est installé un logiciel de contrôle d'accès 4, ce décodeur 2 est connecté à une interface de sécurité amovible 8 ayant une mémoire non volatile qui coopère avec une carte 6 parmi une pluralité de cartes de contrôle d'accès conditionnel.

Dans ce cas, l'appariement est effectué entre le décodeur 2 et l'interface de sécurité amovible 8.

La configuration et l'utilisation par l'opérateur de l'appariement résulte de commandes émises par la plateforme de gestion commerciale 1.

La description qui suit concerne la mise en oeuvre de l'invention dans le cas d'appariement d'un décodeur 2 avec une carte 6. Les étapes mises en oeuvre s'appliquent aux trois architectures décrites ci-dessus.

A la sortie d'usine d'un décodeur 2, comme après un téléchargement du logiciel de contrôle d'accès 4 dans ce décodeur, tous les traitements de l'appariement sont inactifs. En particulier :
- aucun identifiant de carte n'est mémorisé dans le décodeur 2,
- le nombre maximal d'identifiants de cartes mémorisables n'est pas initialisé,
- la mémorisation par le décodeur 2 de l'identifiant d'une carte 6 n'est pas active,
- le contrôle par le décodeur 2 de l'identifiant d'une carte 6 n'est pas actif.

Lorsqu'une carte valide est insérée dans le lecteur de carte prévu à cet effet dans le décodeur 2, l'appariement entre cette carte et le décodeur 2 peut alors être configuré par une requête de l'opérateur sur la plateforme de gestion 1 qui émet vers le décodeur 2 un message de gestion EMM dédié à l'appariement. Ce message de gestion EMM est adressé directement au décodeur 2 ou indirectement via la carte 6. Ce message de gestion EMM permet de réaliser les tâches suivantes :
- activer dans le décodeur 2 la fonction d'appariement ; dans ce cas le décodeur 2 vérifie si l'identifiant de la carte 6 fait partie des identifiants qu'il a mémorisés. Si ce n'est pas le cas, et si le nombre maximal d'identifiants de cartes mémorisables n'est pas atteint, le décodeur mémorise l'identifiant de cette carte.,
- désactiver dans le décodeur la fonction d'appariement. Dans ce cas le décodeur ne contrôle pas et ne mémorise pas l'identifiant de la carte 6,
- effacer les identifiants de cartes déjà mémorisés dans le décodeur.
- définir le nombre maximal d'identifiants de cartes mémorisables par le décodeur.

En outre l'opérateur peut émettre via la plateforme 1, un message EMM contenant une liste imposée des identifiants de cartes 6 appariées à un décodeur 2. Un tel message est adressé au décodeur 2 indirectement via la carte 6.

### ADRESSAGE DES MESSAGES EMM

Les messages EMM permettant la configuration et l'utilisation des fonctionnalités liées à l'appariement selon le procédé de l'invention sont émis dans une voie EMM d'un multiplex numérique tel que défini par le standard MPEG2/Système et les standards DVB/ETSI.

Cette voie peut diffuser des EMM référençant une adresse de carte(s) permettant de les destiner :
- au décodeur dans lequel est insérée une carte particulière,
- aux décodeurs dans lesquels sont insérées les cartes d'un groupe particulier,
- aux décodeurs dans lesquels sont insérées toutes les cartes.

Ces EMM destinés aux décodeurs «via la carte » sont utilisés notamment quand les décodeurs ne disposent pas d'adresse.

Cette voie peut diffuser également des EMM référençant une adresse de décodeur(s) permettant de les destiner directement :
- à un décodeur particulier,
- à un groupe particulier de décodeurs,
- à tous les décodeurs ;

Les EMM directement destinés à tous les décodeurs sont utilisables également quand les décodeurs ne disposent pas d'adresse.

Les messages destinés à un décodeur désigné par une carte particulière ou directement à un décodeur particulier sont des EMM-U présentant la structure suivante :

| | |
|---|---|
| EMM-U_section() { | |
| table_id = 0x88 | 8 bits |
| section_syntax_indicator = 0 | 1 bit |
| DVB_reserved | 1 bit |
| ISO_reserved | 2 bits |
| EMM-U_section_length | 12 bits |
| unique_adress_field | 40 bits |
| for (i=0; i<N; i++) { | |
| EMM_data_byte | 8 bits |
| } | |
| } | |

Le paramètre unique_adress_field est l'adresse unique d'une carte dans un EMM-U carte ou l'adresse unique d'un décodeur dans un EMM-U décodeur

Les messages destinés à des décodeurs désignés par un groupe particulier de cartes ou directement à un groupe particulier de décodeurs sont des EMM-S présentant la structure suivante :

| | |
|---|---|
| EMM-S_section() { | |
| table_id = 0x8E | 8 bits |
| section_syntax_indicator = 0 | 1 bit |
| DVB_reserved | 1 bit |
| ISO_reserved | 2 bits |
| EMM-S_section_length | 12 bits |
| shared_address_field | 24 bits |
| reserved | 6 bits |
| data_format | 1 bit |
| ADF_scrambling_flag | 1 bit |
| for (i=0; i<N; i++) { | |
| EMM_data_byte | 8 bits |
| } | |
| } | |

Le paramètre shared_adress_field est l'adresse du groupe de cartes dans un EMM-S carte ou l'adresse du groupe de décodeurs dans un EMM-S décodeur. Un décodeur d'un groupe ou une carte d'un groupe est concerné(e) par le message si en outre il (elle) est explicitement désigné(e) dans un champ ADF contenu dans EMM_data_byte et pouvant être chiffré selon l'information ADF_scrambling_flag.

Les messages destinés aux décodeurs désignés par toutes les cartes ou directement à tous les décodeurs sont des EMM-G présentant la structure suivante :

| | |
|---|---|
| EMM-G_section() { | |
| table_id = 0x8A ou 0x8B | 8 bits |
| section_syntax_indicator = 0 | 1 bit |
| DVB_reserved | 1 bit |
| ISO_reserved | 2 bits |
| EMM-G_section_length | 12 bits |
| for (i=0; i<N; i++) { | |
| EMM_data_byte | 8 bits |
| } | |
| } | |

### CONTENU DES MESSAGES EMM

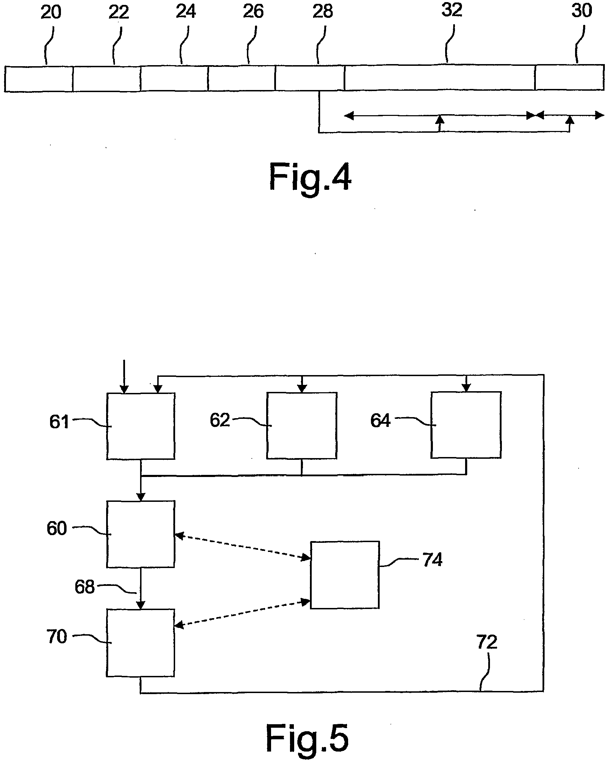

La figure 4 illustre schématiquement le contenu des données EMM_data_byte d'un message EMM d'appariement. Ce contenu dépend de la fonction à exécuter par le décodeur 2 pour la configuration ou l'utilisation de l'appariement.

Les données EMM_data_byte incluent les paramètres fonctionnels suivants :
- ADF 20: complément d'adressage d'un décodeur dans un groupe de décodeurs ; ce paramètre est utile en cas d'adressage par groupe sinon il peut être omis ; il peut être chiffré,
- SOID 22 : identification de messages d'appariement selon l'invention, parmi d'autres types de messages,
- OPID/NID 24 : identification du parc de décodeurs et du signal de l'opérateur,
- TIME 26 : données d'horodatage de l'émission du message ; ce paramètre est utilisé pour éviter le rejeu du message par un même décodeur,
- CRYPTO 28 : identification des fonctions de protection cryptographique appliquées aux paramètres FUNCTIONS 32.

Les paramètres FUNCTIONS peuvent être chiffrés et protégés par une redondance cryptographique 30.
- FUNCTIONS 32 : ensemble des paramètres décrivant la configuration et l'utilisation de l'appariement.

Les paramètres fonctionnels ci-dessus sont organisés librement dans les données EMM_data_byte d'un message EMM. Une implémentation préférée est la combinaison de ces paramètres par structure T L V (Type Longueur Valeur).

### TRAITEMENT DES MESSAGES EMM

Les paramètres fonctionnels ci-dessus sont destinés à être traités par le décodeur 2.

Quand ils sont transmis dans un EMM décodeur, ces paramètres constituent le contenu utile de l'EMM.

Quand ils sont transmis dans un EMM carte, ces paramètres constituent une partie, clairement identifiable par la carte, du contenu utile de l'EMM qui contient d'autres paramètres concernant la carte. Cette dernière se charge alors d'extraire les paramètres fonctionnels qui le concernent de l'EMM et de les transmettre au décodeur 2. Une réalisation préférée pour permettre ce mécanisme de tri consiste à intégrer ces paramètres fonctionnels dans un paramètre d'encapsulation non traitable par la carte. Ainsi, à la détection par la carte 6 de cette encapsulation, la carte 6 envoie au décodeur 2 une réponse de type « Paramètre Non Interprétable (PNI) » accompagnée de l'ensemble des paramètres du décodeur 2.

La carte 6 reçoit également un ordre daté d'inscription de données via un EMM carte, permettant, d'une part, de s'assurer que la carte 6 n'a pas déjà traité ce message dans un autre décodeur, afin d'éviter le rejeu sur un autre décodeur et, d'autre part, de limiter le traitement de cet EMM par un seul décodeur. Sémantiquement ces données signifient « Déjà traité ». Une réalisation préférée de ce mécanisme d'anti-rejeu est l'inscription de ces données d'anti-rejeu dans un bloc de données FAC (Facilities Data Block en anglais) de la carte.

Si suite au traitement d'un EMM_carte d'appariement la carte répond « PNI » et « Déjà Traité» le décodeur 2 ne prend pas en compte les paramètres qu'il reçoit.

### CONFIGURATION ET UTILISATION DE L'APPARIEMENT

L'ensemble des paramètres FUNCTIONS 32 décrit la configuration et l'utilisation de l'appariement selon l'invention. Cet ensemble de paramètres est une combinaison quelconque des paramètres fonctionnels suivants :
- MODE : ce paramètre active, désactive ou réinitialise la solution d'appariement. Après désactivation, le décodeur ne contrôle pas l'identifiant d'une carte insérée dans le décodeur mais conserve la liste des identifiants déjà mémorisés, et après réinitialisation, le décodeur ne contrôle pas l'identifiant d'une carte insérée et n'a plus d'identifiant de cartes mémorisé.
- NBCA (Nombre de cartes autorisées) : ce paramètre impose le nombre maximal d'identifiants de cartes qu'un décodeur est autorisé à mémoriser ; quand il n'est pas renseigné, NBCA est défini par l'implémentation du module logiciel dans le décodeur selon l'invention
- LCA (Liste de cartes autorisées) : ce paramètre impose à un décodeur la liste des identifiants de cartes avec lesquelles il peut fonctionner.
- Perturbation : ce paramètre décrit la perturbation à appliquer par le décodeur dans l'accès aux données en cas de carte non appariée avec le décodeur.

Les paramètres fonctionnels ci-dessus sont organisés librement dans l'ensemble de paramètres FUNCTIONS 32. Une implémentation préférée est la combinaison de ces paramètres par structure T L V (Type Longueur Valeur).

### FONCTIONNEMENT

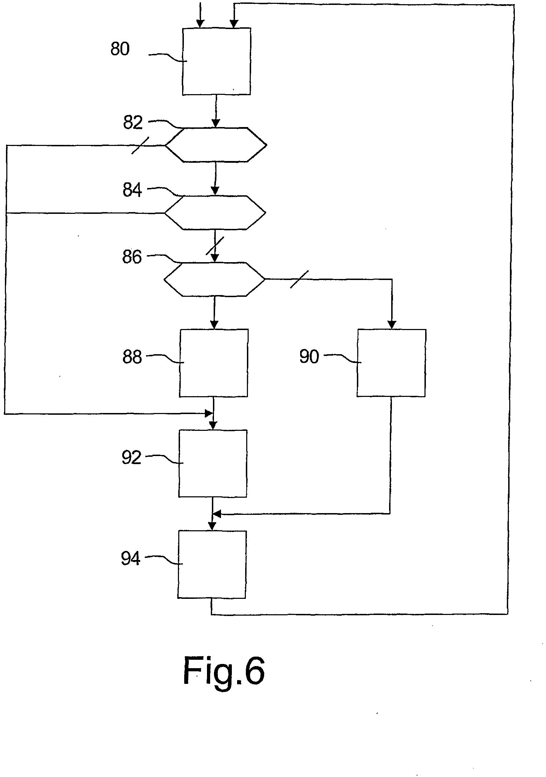

Le fonctionnement de l'appariement selon l'invention va maintenant être décrit par référence aux figures 5 et 6.

La figure 5 est un diagramme fonctionnel illustrant schématiquement les états de la fonction d'appariement du logiciel de contrôle d'accès 4 embarqué dans un décodeur 2.

La fonction d'appariement est dans l'état inactif 60 quand le logiciel de contrôle d'accès 4 vient d'être installé ou téléchargé (étape 61) ou quand il a reçu de la plateforme 1 un ordre de désactivation de l'appariement (étape 62) ou de réinitialisation de l'appariement (étape 64). Dans cet état le logiciel de contrôle d'accès 4 accepte de fonctionner avec une carte 6 insérée dans le décodeur 2 sans vérifier son appariement avec cette carte.

Pour effectuer l'activation de l'appariement dans un décodeur 2, l'opérateur définit via la plateforme 1 un mode d'appariement (= actif), optionnellement le nombre maximum NBCA de cartes 6 susceptibles d'être appariées avec le décodeur 2 et le type de perturbation applicable dans l'accès aux données en cas d'échec de l'appariement. En fonction de ces informations la plateforme 1 génère et émet (flèche 68) un message EMM adressant le ou les décodeurs concernés et contenant les paramètres de configuration. La fonction d'appariement dans le décodeur passe à l'état actif 70.

L'opérateur peut désactiver l'appariement dans le décodeur 2, via la plateforme 1 qui génère et émet (flèche 72) un message EMM adressant le ou les décodeurs concernés et contenant un ordre de désactivation sans effacement du contexte d'appariement 62 ou un ordre de RAZ du contexte d'appariement 64. La fonction d'appariement dans le décodeur passe à l'état inactif 60.

Quel que soit l'état inactif ou actif de la fonction d'appariement, elle peut recevoir (étape 74) une liste de cartes autorisées LCA par EMM émise par la plateforme 1.

La prise en compte d'une carte 6 par la fonction d'appariement dans un décodeur 2 est décrite dans l'organigramme de la figure 6.

A l'insertion (étape 80) d'une carte 6 dans le décodeur 2, le logiciel de contrôle d'accès 4 embarqué dans le décodeur teste (étape 82) si la fonction d'appariement est dans l'état actif 70.

Si la fonction d'appariement dans le décodeur est dans l'état inactif 60, le décodeur accepte de fonctionner avec la carte insérée (étape 92).

Si la fonction d'appariement dans le décodeur est dans l'état actif 70, le logiciel de contrôle d'accès lit l'identifiant de la carte et vérifie (étape 84) si cet identifiant de la carte insérée est déjà mémorisé dans le décodeur 2. Si l'identifiant de cette carte 6 est déjà mémorisé dans le décodeur 2, le logiciel de contrôle d'accès 4 accepte de fonctionner avec la carte insérée (étape 92). Dans ce cas, l'accès aux programmes diffusés est alors possible, sous réserve de conformité des autres conditions d'accès attachées à ces programmes.

Si l'identifiant de cette carte 6 n'est pas mémorisé dans le décodeur 2, le logiciel de contrôle d'accès vérifie (étape 86) si le nombre d'identifiants de cartes 6 déjà mémorisés est inférieur à la valeur maximum NBCA de cartes 6 autorisées par la configuration.
- Si ce nombre NBCA est atteint, le logiciel de contrôle d'accès 4 refuse de fonctionner avec la carte 6 insérée dans le lecteur du décodeur 2, et applique (étape 90) la perturbation dans l'accès aux données telle que définie par l'opérateur. Une telle perturbation peut consister à bloquer l'accès aux programmes diffusés. Elle peut être accompagnée de l'affichage sur l'écran du terminal auquel est associé le décodeur 2 d'un message invitant l'abonné à insérer une autre carte 6 dans le décodeur 2,
- Si ce nombre NBCA n'est pas atteint, l'identifiant de la carte 6 insérée dans le lecteur du décodeur 2 est ajouté à la liste des identifiants mémorisés (étape 88). Le logiciel de contrôle d'accès 4 accepte ensuite de fonctionner avec la carte 6 insérée (étape 92).

Quand la carte 6 est extraite (étape 94) du décodeur 2, le logiciel de contrôle d'accès 4 passe en attente de l'insertion d'une carte 6 (étape 80).

La perturbation 90 dans l'accès aux données en cas de défaut d'appariement peut être de différente nature telle que par exemple :
- Arrêt audio et vidéo sur les chaînes cryptées (obtenu par non soumission des ECM à la carte pour calcul des CW) ;
- Arrêt audio et vidéo sur les chaînes en clair et analogiques (obtenu par message au middleware) ;
- Envoi d'un message au middleware du terminal (exemple : message Open TV).

Cette perturbation peut être utilisée également pour provoquer le blocage de décodeurs volés.

Dans le cas décrit dans la figure 2 où le logiciel de contrôle d'accès 4 est exécuté dans l'interface amovible 8 connectée à un décodeur 2, l'automate décrit dans la figure 4 et l'organigramme décrit dans la figure 5 s'appliquent directement au logiciel de contrôle d'accès embarqué 4 dans cette interface amovible 8.

## Revendications

1. Procédé d'appariement d'un équipement récepteur de données numériques (2) avec une pluralité de modules externes de sécurité (6, 8) ayant chacun un identifiant unique destinés à gérer l'accès des données numériques distribuées par un opérateur, procédé **caractérisé par** les étapes suivantes :
- transmettre à l'équipement récepteur (2) une signalisation comportant au moins un message de gestion de la mémorisation de l'identifiant du module externe de sécurité (6, 8) et/ou un message de gestion de la phase de contrôle comportant un nombre NBCA représentant le nombre maximal d'identifiants de cartes qu'un décodeur est autorisé à mémoriser
- connecter un module externe de sécurité (6, 8) à l'équipement récepteur,
- mémoriser à la volée dans l'équipement récepteur (2) l'identifiant unique du module de sécurité (6, 8) connecté,
- vérifier si le nombre NBCA est atteint ou pas,
- Si le nombre NBCA est atteint, interdire la mémorisation,
- sinon autoriser la mémorisation.

2. Procédé selon la revendication 1, **caractérisé en ce qu'**il comporte en outre une phase de contrôle consistant à vérifier, à chaque connexion ultérieure d'un module externe de sécurité (6, 8) à l'équipement récepteur(2), si l'identifiant dudit module est mémorisé dans cet équipement récepteur (2).

3. Procédé selon la revendication 1, **caractérisé en ce que** ladite signalisation comporte au moins une des consignes suivantes :
- autoriser la mémorisation,
- interdire la mémorisation,
- effacer les identifiants déjà mémorisés dans l'équipement récepteur (2),
- activer ou désactiver la phase de contrôle.

4. Procédé selon la revendication 3, **caractérisé en ce que** ladite signalisation comporte en outre une consigne de reconfiguration par laquelle on transmet à l'équipement récepteur (2) une liste mise à jour des identifiants des modules externes de sécurité (6, 8) appariés avec ledit équipement récepteur (2).

5. Procédé selon la revendication 4, **caractérisé en ce que** ladite liste est transmise directement à l'équipement récepteur (2).

6. Procédé selon la revendication 4, **caractérisé en ce que** ladite liste est transmise via un module externe de sécurité (6, 8) connecté audit équipement récepteur (2).

7. Procédé selon la revendication 2, dans lequel ladite phase de contrôle comporte une procédure consistant à perturber le traitement des données si
l'identifiant du module externe de sécurité (6, 8) connecté n'est pas préalablement mémorisé l'équipement récepteur (2).

8. Procédé selon la revendication 1, **caractérisé en ce que** lesdites données sont distribuées en clair ou embrouillées par un mot de contrôle chiffré, et **en ce que** chaque module externe de sécurité (6, 8) comporte des droits d'accès auxdites données et un algorithme de déchiffrement dudit mot de contrôle.

9. Procédé selon la revendication 4, **caractérisé en ce que** ladite signalisation est transmise à un équipement récepteur (2) dans un message EMM spécifique à un module externe de sécurité (6, 8) associé à cet équipement récepteur (2).

10. Procédé selon la revendication 4, **caractérisé en ce que** ladite signalisation est transmise à un équipement récepteur (2) dans un message EMM spécifique à cet équipement récepteur (2).

11. Procédé selon la revendication 4, **caractérisé en ce que**, pour un équipement récepteur (2) donné, la liste mise à jour des identifiants des modules externes de sécurité (6, 8) est transmise dans un message EMM spécifique à un module de sécurité (6, 8) associé à cet équipement récepteur (2).

12. Procédé selon la revendication 4, **caractérisé en ce que** ladite signalisation est transmise à un groupe d'équipements récepteurs (2) dans un message EMM spécifique à un groupe de modules externes de sécurité (6, 8) associés auxdits équipements récepteurs (2).

13. Procédé selon la revendication 4, **caractérisé en ce que** ladite signalisation est transmise à un groupe d'équipements récepteurs (2) dans un message EMM spécifique audit groupe d'équipements récepteurs (2).

14. Procédé selon la revendication 4, **caractérisé en ce que**, pour un groupe d'équipements récepteurs (2) donné, la liste mise à jour des identifiants des modules externes de sécurité (6, 8) est transmise dans un message EMM spécifique à un groupe de modules externes de sécurité (6, 8) associées auxdits équipements récepteurs (2).

15. Procédé selon la revendication 4, **caractérisé en ce que** ladite signalisation de contrôle est transmise dans un flux privé à un groupe d'équipements récepteurs (2).

16. Procédé selon la revendication 4, **caractérisé en ce que**, pour un groupe d'équipements récepteurs (2) donné, la liste mise à jour des identifiants des modules externes de sécurité (6, 8) est transmise dans un flux privé à chaque équipement récepteur (2).

17. Procédé selon la revendication 16, **caractérisé en ce que** ledit flux privé est traité par un logiciel dédié exécutable dans chaque équipement récepteur (2) en fonction de l'identifiant du module externe de sécurité (6, 8) qui lui est associé.

18. Procédé selon l'une des revendications 9 à 14, **caractérisé en ce qu'**il comporte en outre un mécanisme destiné empêcher l'utilisation d'un EMM transmis à un même module externe de sécurité (6, 8) dans deux équipements récepteurs (2) distincts.

19. Procédé selon la revendication 18, **caractérisé en ce que** ledit EMM présente le format suivant :
| | |
|---|---|
| EMM-U_section() { | |
| table_id = 0x88 | 8 bits |
| section_syntax_indicator = 0 | 1 bit |
| DVB_reserved | 1 bit |
| ISO_reserved | 2 bits |
| EMM-U_section_length | 12 bits |
| unique_adress_field | 40 bits |
| for (i=0; i<N; i++) { | |
| EMM_data_byte | 8 bits |
| } | |
| } | |

20. Procédé selon l'une des revendications 12 à 14, **caractérisé en ce que** ledit EMM est spécifique à tous les modules externes de sécurité (6, 8) ou à tous les équipements récepteurs (2) et présente le format suivant :
| | |
|---|---|
| EMM-G_section() { | |
| table_id = 0x8A ou 0x8B | 8 bits |
| section_syntax_indicator = 0 | 1 bit |
| DVB_reserved | 1 bit |
| ISO_reserved | 2 bits |
| EMM-G_section_length | 12 bits |
| for (i=0; i<N; i++) { | |
| EMM_data_byte | 8 bits |
| } | |
| } | |

21. Procédé selon l'une des revendications 12 à 14, **caractérisé en ce que** ledit EMM est spécifique à un sous-groupe de modules externes de sécurité (6, 8) ou d'équipements récepteurs (2) et présente le format suivant :
| | |
|---|---|
| EMM-S_section() { | |
| table id = 0x8E | 8 bits |
| section_syntax_indicator = 0 | 1 bit |
| DVB_reserved | 1 bit |
| ISO_reserved | 2 bits |
| EMM-S_section_length | 12 bits |
| shared address field | 24 bits |
| reserved | 6 bits |
| data_format | 1 bit |
| ADF_scrambling_flag | 1 bit |
| for (1=0; i<N; i++) { | |
| EMM_data_byte | 8 bits |
| } | |
| } | |

22. Procédé selon la revendication 1, **caractérisé en ce que** les identifiants de modules externe de sécurité (6, 8) sont groupés dans une liste chiffrée.

23. Procédé selon l'une quelconque des revendications 1 à 22, **caractérisé en ce que** l'équipement récepteur (2) comporte un décodeur et le module externe de sécurité (6, 8) comporte une carte de contrôle d'accès (6) dans laquelle sont mémorisées des informations relatives aux droits d'accès d'un abonné à des données numériques distribuées par un opérateur, et **en ce que** l'appariement est effectué entre ledit décodeur et ladite carte (6).

24. Procédé selon l'une quelconque des revendications 1 à 22, **caractérisé en ce que** l'équipement récepteur (2) comporte un décodeur et le module externe de sécurité (6, 8) comporte une interface de sécurité amovible (8) munie d'une mémoire non volatile et destinée à coopérer, d'une part, avec le décodeur, et d'autre part, avec une pluralité de cartes de contrôle (6) d'accès conditionnel pour gérer l'accès à des données numériques distribuées par un opérateur, et **en ce que** l'appariement est effectué entre ledit décodeur et ladite interface (8) de sécurité amovible.

25. Procédé selon l'une quelconque des revendications 1 à 22, **caractérisé en ce que** l'équipement récepteur (2) comporte un décodeur muni d'une interface de sécurité amovible (8) ayant une mémoire non volatile et destinée à coopérer, d'une part, avec ledit décodeur, et d'autre part, avec une pluralité de cartes de contrôle (6) d'accès conditionnel et **en ce que** l'appariement est réalisé entre ladite interface de sécurité amovible (8) et lesdites cartes de contrôle d'accès (6).

26. Procédé selon la revendication 8, **caractérisée en ce que** les données sont des programmes audiovisuels.

27. Equipement récepteur (2) susceptible d'être apparié avec une pluralité de modules externes de sécurité (6, 8) ayant chacun un identifiant unique pour gérer l'accès à des données numériques distribuées par un opérateur, **caractérisé en ce qu'**il comporte :
- des moyens pour mémoriser à la volée l'identifiant de chaque module externe de sécurité (6, 8) qui lui est connecté,
- des moyens pour vérifier si un nombre NBCA représentant le nombre maximal d'identifiants de cartes qu'un décodeur est autorisé à mémoriser préalablement transmis à l'équipement récepteur (2) représentant le nombre maximal d'identifiants de cartes qu'un équipement récepteur (2) est autorisé à mémoriser est atteint ou pas,
- des moyens interdire la mémorisation pour si le nombre NBCA est atteint,
- des moyens autoriser la mémorisation si le nombre NBCA n'est pas atteint

28. Equipement selon la revendication 27, **caractérisé en ce qu'**il comporte un décodeur et **en ce que** le module externe de sécurité (6, 8) est une carte de contrôle d'accès (6) comportant des informations relatives aux droits d'accès d'un abonné auxdites données numériques, l'appariement étant effectué entre ledit décodeur et ladite carte (6).

29. Equipement récepteur selon la revendication 28, **caractérisé en ce qu'**il comporte un décodeur et **en ce que** le module externe de sécurité (6, 8) est une interface de sécurité amovible (8) munie d'une mémoire non volatile et destinée à coopérer, d'une part, avec ledit décodeur, et d'autre part, avec une pluralité de cartes de contrôle d'accès conditionnel (6), pour gérer l'accès auxdites données numériques, l'appariement étant effectué entre ledit décodeur et ladite interface de sécurité amovible (8).

30. Equipement récepteur selon la revendication 27, **caractérisé en ce qu'**il comporte un décodeur muni d'une interface de sécurité amovible (8) ayant une mémoire non volatile et destinée à coopérer, d'une part, avec ledit décodeur, et d'autre part, avec une pluralité de cartes de contrôle (6) d'accès conditionnel et **en ce que** l'appariement est réalisé entre ladite interface de sécurité amovible (8) et lesdites cartes de contrôle d'accès (6).

31. Interface de sécurité amovible (8) comportant une mémoire non volatile et destinée à coopérer, d'une part, avec un équipement récepteur (2), et d'autre part, avec une pluralité de cartes de contrôle d'accès (6) conditionnel, pour gérer l'accès à des données numériques distribuées par un opérateur, chaque carte (6) ayant un identifiant unique et comportant des informations relatives aux droits d'accès d'un abonné auxdites données numériques, interface **caractérisée en ce qu'**elle comporte :
- des moyens pour mémoriser à la volée l'identifiant de chaque module externe de sécurité (6, 8) qui lui est connecté,
- des moyens pour vérifier si un nombre NBCA représentant le nombre maximal d'identifiants de cartes qu'un décodeur est autorisé à mémoriser, préalablement transmis à l'équipement récepteur (2), représentant le nombre maximal d'identifiants de cartes qu'un équipement récepteur (2) est autorisé à mémoriser est atteint ou pas,
- des moyens interdire la mémorisation pour si le nombre NBCA est atteint,
- des moyens autoriser la mémorisation si le nombre NBCA n'est pas atteint

32. Interface selon la revendication 31 **caractérisée en ce qu'**elle consiste en en une carte PCMCIA comportant un logiciel de désembrouillage de données numériques.

33. Interface selon la revendication 32 **caractérisée en ce qu'**elle consiste en un module logiciel.

34. Programme d'ordinateur exécutable dans un équipement récepteur (2) susceptible de coopérer avec une pluralité de modules externes de sécurité (6, 8) ayant chacun un identifiant unique et dans lesquels sont stockées des informations relatives aux droits d'accès d'un abonné à des données numériques distribuées par un opérateur, **caractérisé en ce qu'**il comporte :
- des instructions pour mémoriser à la volée l'identifiant de chaque module externe de sécurité (6, 8) qui lui est connecté,
- des instructions pour vérifier si un nombre NBCA représentant le nombre maximal d'identifiants de cartes qu'un équipement récepteur (2) est autorisé à mémoriser, prélablement transmis à l'équipement récepteur (2), représentant le nombre maximal d'identifiants de cartes qu'un équipement récepteur (2) est autorisé à mémoriser est atteint ou pas,
- des instructions pour interdire la mémorisation pour si le nombre NBCA est atteint,
- des moyens autoriser la mémorisation si le nombre NBCA n'est pas atteint.

35. Programme d'ordinateur selon la revendication 34, **caractérisé en ce qu'**il comporte en outre des instructions destinées à générer localement des paramètres de contrôle de l'appariement de l'équipement récepteur (2) avec un module externe de sécurité (6,8) en fonction d'une signalisation transmise audit équipement récepteur (2) par l'opérateur.

36. Système comportant une pluralité d'équipements récepteurs (2) selon la revendication 27 connectés à un réseau de diffusion de données et/ou services, chaque équipement récepteur (2) étant susceptible d'être apparié avec une pluralité de modules externes de sécurité (6, 8), ledit système comportant en outre une plateforme de gestion commerciale (1) communiquant avec les équipements récepteurs (2) et avec lesdits modules externes de sécurité (6, 8),**caractérisé en ce qu'**il comporte en outre :
- un premier module agencé dans ladite plate-forme de gestion commerciale (1) et destiné à générer des requêtes d'appariement,
- et un deuxième module agencé dans lesdits équipements récepteurs (2) et destiné à traiter lesdites requêtes pour préparer une configuration de l'appariement et pour contrôler l'appariement.

## Patentansprüche

1. Verfahren zum Abgleich eines Empfangsgeräts (2) für numerische Daten mit einer Mehrzahl externer Sicherheitsmodule (6, 8), die jeweils eine eindeutige Benutzerkennung aufweisen und dazu bestimmt sind, den Zugang zu den durch einen Betreiber verteilten numerischen Daten zu steuern, wobei das Verfahren durch die folgenden Schritte gekennzeichnet ist:
- Übertragen eines Signals an ein Empfangsgerät (2), das wenigstens eine Steuerungsnachricht zum Speichern der Benutzerkennung des externen Sicherheitsmoduls (6, 8) und/oder einer Steuerungsnachricht der Kontrollphase, die eine NCBA-Zahl beinhaltet, welche die maximale Anzahl Kartenkennungen darstellt, welche ein Decoder zu speichern befugt ist,
- Verbinden eines externen Sicherheitsmoduls (6, 8) mit dem Empfangsgerät,
- Speichern der eindeutigen Benutzerkennung des verbundenen Sicherheitsmoduls (6, 8) im Empfangsgerät (2) in Echtzeit,
- Bestätigen ob die NBCA-Zahl erreicht ist oder nicht,
- wenn die NCBA-Zahl erreicht ist, Untersagen des Speicherns,
- wenn nicht, Zulassen des Speicherns.

2. Verfahren gemäß Anspruch 1, **dadurch gekennzeichnet, dass** es außerdem eine Kontrollphase umfasst, die aus dem Bestätigen bei jeder nachfolgenden Verbindung eines externen Sicherheitsmoduls (6, 8) mit einem Empfangsgerät (2), ob die Kennung des besagten Moduls in diesem Empfangsgerät (2) gespeichert ist, besteht.

3. Verfahren gemäß Anspruch 1, **dadurch gekennzeichnet, dass** das besagte Signal wenigstens eine der folgenden Maßnahmen beinhaltet:
- Zulassen des Speicherns,
- Untersagen des Speicherns,
- Löschen der bereits im Empfangsgerät (2) gespeicherten Benutzerkennungen,
- Aktivieren oder Deaktivieren der Kontrollphase.

4. Verfahren gemäß Anspruch 3, **dadurch gekennzeichnet, dass** das besagte Signal außerdem eine Maßnahme zur Rekonfiguration umfasst, wodurch auf das Empfangsgerät (2) eine aktualisierte Liste der dem Empfangsgerät (2) zugeordneten Kennungen der externen Sicherheitsmodule (6, 8) übertragen wird.

5. Verfahren gemäß Anspruch 4, **dadurch gekennzeichnet, dass** die besagte Liste direkt auf das Empfangsgerät (2) übertragen wird.

6. Verfahren gemäß Anspruch 4, **dadurch gekennzeichnet, dass** die besagte Liste über ein externes, mit dem besagten Empfangsgerät (2) verbundenes Sicherheitsmodul (6, 8) übertragen wird.

7. Verfahren gemäß Anspruch 2, bei dem die besagte Kontrollphase ein Verfahren umfasst, das aus der Störung der Verarbeitung der Daten besteht, wenn die Benutzerkennung des damit verbundenen externen Sicherheitsmoduls (6, 8) nicht zuvor das Empfangsgerät (2) gespeichert hat.

8. Verfahren gemäß Anspruch 1, **dadurch gekennzeichnet, dass** die besagten Daten im Klartext oder durch ein verschlüsseltes Passwort verwürfelt verbreitet werden und dadurch, dass jedes externe Sicherheitsmodul (6, 8) Zugangsrechte zu diesen Daten und einen Entschlüsselungsalgorithmus für dieses Passwort umfasst.

9. Verfahren gemäß Anspruch 4, **dadurch gekennzeichnet, dass** das besagte Signal in einer EMM-Mitteilung, die für ein mit diesem Empfangsgerät (2) verbundenes, externes Sicherheitsmodul (6, 8) spezifisch ist, zu einem Empfangsgerät (2) übertragen wird.

10. Verfahren gemäß Anspruch 4, **dadurch gekennzeichnet, dass** das besagte Signal in einer EMM-Mitteilung, die für dieses Empfangsgerät (2) spezifisch ist, zu einem Empfangsgerät (2) übertragen wird

11. Verfahren gemäß Anspruch 4, **dadurch gekennzeichnet, dass** bei einem vorgegebenen Empfangsgerät (2) die aktualisierte Liste der Benutzerkennungen in einer EMM-Mitteilung, die für ein mit diesem Empfangsgerät (2) verbundenes, externes Sicherheitsmodul spezifisch ist, übertragen wird.

12. Verfahren gemäß Anspruch 4, **dadurch gekennzeichnet, dass** das besagte Signal in einer EMM-Mitteilung, die für eine Gruppe mit diesen Empfangsgeräten (2) verbundener, externer Sicherheitsmodule (6, 8) spezifisch ist, auf eine Gruppe von Empfangsgeräten (2) übertragen wird.

13. Verfahren gemäß Anspruch 4, **dadurch gekennzeichnet, dass** das besagte Signal in einer EMM-Mitteilung, die für eine Gruppe dieser Empfangsgeräte (2) spezifisch ist, auf eine Gruppe von Empfangsgeräten (2) übertragen wird.

14. Verfahren gemäß Anspruch 4, **dadurch gekennzeichnet, dass** bei einer vorgegebener Gruppe von Empfangsgeräten (2) die aktualisierte Liste der Benutzerkennungen der externen Sicherheitsmodule (6, 8) in einer EMM-Mitteilung, die für eine Gruppe mit den besagten Empfangsgeräten (2) verbundener, externer Sicherheitsmodule (6, 8) spezifisch ist, übertragen wird.

15. Verfahren gemäß Anspruch 4, **dadurch gekennzeichnet, dass** das besagte Prüfsignal in einem vertraulichen Datenstrom zu einer Gruppe von Empfangsgeräten (2) übertragen wird.

16. Verfahren gemäß Anspruch 4, **dadurch gekennzeichnet, dass** bei einer vorgegebenen Gruppe von Empfangsgeräten (2) die aktualisierte Liste der Benutzerkennungen der externen Sicherheitsmodule (6, 8) in einem vertraulichen Datenstrom zu jedem Empfangsgerät (2) übertragen wird.

17. Verfahren gemäß Anspruch 16, **dadurch gekennzeichnet, dass** der besagte vertrauliche Datenstrom durch eine Software verarbeitet wird, die in jedem Empfangsgerät (2) als Funktion der Benutzerkennung des externen Sicherheitsmoduls (6, 8), mit dem es verbunden ist, ausgeführt werden kann.

18. Verfahren gemäß einem der Ansprüche 9 bis 14, **dadurch gekennzeichnet, dass** es außerdem einen Mechanismus umfasst, der die Verwendung einer zu demselben externen Sicherheitsmodul (6, 8) in zwei verschiedenen Empfangsgeräten (2) übertragenen EMM verhindert.

19. Verfahren gemäß Anspruch 18, **dadurch gekennzeichnet, dass** die besagte EMM das folgende Format aufweist:
| | |
|---|---|
| EMM-U_section() { | |
| table_id = 0x88 | 8 bits |
| section_syntax_indicator = 0 | 1 bit |
| DVB_reserved | 1 bit |
| ISO_reserved | 2 bits |
| EMM-U_section_length | 12 bits |
| unique_address_field | 40 bits |
| for (i=0; i<N; i++) { | |
| EMM_data_byte | 8 bits |
| } | |
| } | |

20. Verfahren gemäß einem der Ansprüche 12 bis 14, **dadurch gekennzeichnet, dass** die besagte EMM für alle externen Sicherheitsmodule (6, 8) oder alle Empfangsgeräte (2) spezifisch ist und das folgende Format aufweist:
| | |
|---|---|
| EMM-G_section() { | |
| table_id = 0x8A oder 0x8B | 8 bits |
| section_syntax_indicator = 0 | 1 bit |
| DVB_reserved | 1 bit |
| ISO_reserved | 2 bits |
| EMM-G_section_length | 12 bits |
| for (i=0; i<N; i++) { | |
| EMM_data_byte | 8 bits |
| } | |
| } | |

21. Verfahren gemäß einem der Ansprüche 12 bis 14, **dadurch gekennzeichnet, dass** die besagte EMM für eine Untergruppe der externen Sicherheitsmodule (6, 8) oder Empfangsgeräte (2) spezifisch ist und das folgende Format aufweist:
| | |
|---|---|
| EMM-S_section() { | |
| table_id = 0x8E | 8 bits |
| section_syntax_indicator = 0 | 1 bit |
| DVB_reserved | 1 bit |
| ISO_reserved | 2 bits |
| EMM-S_section_length | 12 bits |
| shared_address_field | 24 bits |
| reserved | 6 bits |
| data_format | 1 bit |
| ADF_scrambling_flag | 1 bit |
| for (i=0; i<N; i++) { | |
| EMM_data_byte | 8 bits |
| } | |
| } | |

22. Verfahren gemäß Anspruch 1, **dadurch gekennzeichnet, dass** die Benutzerkennungen der externen Sicherheitsmodule (6, 8) in einer verschlüsselten Liste zusammengefasst sind.

23. Verfahren gemäß einem der Ansprüche 1 bis 22, **dadurch gekennzeichnet, dass** das Empfangsgerät (2) einen Decoder umfasst und das externe Sicherheitsmodul (6, 8) eine Zugangskontrollkarte (6) umfasst, auf der Informationen bezüglich der Zugangsrechte eines Abonnenten durch einen Betreiber verteilter numerischer Daten gespeichert sind, und dadurch, dass ein Abgleich zwischen diesem Decoder und dieser Karte (6) durchgeführt wird.

24. Verfahren gemäß einem der Ansprüche 1 bis 22, **dadurch gekennzeichnet, dass** das Empfangsgerät (2) einen Decoder umfasst und das externe Sicherheitsmodul (6, 8) eine wechselbare Sicherheitsschnittstelle (8) umfasst, die mit einem nicht-flüchtigen Speicher ausgestattet ist und dazu bestimmt ist, einerseits mit dem Decoder und andererseits mit einer Mehrzahl Kontrollkarten (6) für einen bedingten Zugang zusammenzuarbeiten, um den Zugang zu den durch einen Betreiber verteilten digitalen Daten zu verwalten, und dadurch, dass der Abgleich zwischen dem Decoder und der besagten wechselbaren Sicherheitsschnittstelle (8) durchgeführt wird.

25. Verfahren gemäß einem der Ansprüche 1 bis 22, **dadurch gekennzeichnet, dass** das Empfangsgerät (2) einen Decoder umfasst, der mit einer wechselbaren Sicherheitsschnittstelle (8) mit einem nicht-flüchtigen Speicher ausgestattet ist und dazu bestimmt ist, einerseits mit dem besagten Decoder und andererseits mit einer Mehrzahl Kontrollkarten (6) für einen bedingten Zugang zusammenzuarbeiten, und dadurch, dass der Abgleich zwischen der besagten wechselbaren Sicherheitsschnittstelle (8) und den besagten Zugangskontrollkarten (6) durchgeführt wird.

26. Verfahren gemäß Anspruch 8, **dadurch gekennzeichnet, dass** die Daten audiovisuelle Programme sind.

27. Empfangsgerät (2), das mit einer Mehrzahl externer Sicherheitsmodule (6, 8) mit jeweils einem einmaligen Benutzernamen zum Verwalten des Zugangs zu von einem Betreiber verteilten numerischen Daten abgeglichen werden kann, **dadurch gekennzeichnet, dass** es Folgendes umfasst:
- Mittel zum Speichern der Benutzerkennung jedes externen Sicherheitsmoduls (6, 8) mit dem es verbunden ist, in Echtzeit,
- Mittel zum Überprüfen, ob eine NBCA-Zahl, die die Höchstzahl zuvor auf das Empfangsgerät (2) übertragener Benutzerkennungen von Karten darstellt, die ein Decoder zu speichern befugt ist, und wobei die Höchstzahl Benutzerkennungen von Karten, die ein Empfangsgerät (2) zu speichern befugt ist, erreicht wird oder nicht,
- Mittel zum Verbot des Speicherns, wenn die NCBA-Zahl erreicht ist,
- Mittel zum Zulassen des Speicherns, wenn die NCBA-Zahl nicht erreicht ist.

28. Gerät gemäß Anspruch 27, **dadurch gekennzeichnet, dass** es einen Decoder umfasst und dadurch, dass das externe Sicherheitsmodul (6, 8) eine Zugangskontrollkarte (6) ist, die Informationen bezüglich der Zugangsrechte eines Abonnenten für die besagten numerischen Daten umfasst, wobei der Abgleich zwischen dem besagten Decoder und der besagten Karte (6) durchgeführt wird.

29. Empfangsgerät gemäß Anspruch 28, **dadurch gekennzeichnet, dass** es einen Decoder umfasst und dadurch, dass das externe Sicherheitsmodul (6, 8) eine wechselbare Sicherheitsschnittstelle (8) umfasst, die mit einem nicht-flüchtigen Speicher ausgestattet ist und dazu bestimmt ist, einerseits mit dem Decoder und andererseits mit einer Mehrzahl Zugangskontrollkarten (6) zum Verwalten eines bedingten Zugangs zu den besagten numerischen Daten zusammenzuarbeiten, wobei der Abgleich zwischen dem Decoder und der besagten wechselbaren Sicherheitsschnittstelle (8) durchgeführt wird.

30. Empfangsgerät gemäß Anspruch 27, **dadurch gekennzeichnet, dass** es einen Decoder umfasst, der mit einer wechselbaren Sicherheitsschnittstelle (8) ausgestattet ist, die einen nicht-flüchtigen Speicher aufweist und dazu bestimmt ist, einerseits mit dem besagten Decoder und andererseits mit einer Mehrzahl Kontrollkarten (6) für einen bedingten Zugang zusammenzuarbeiten und dadurch, dass der Abgleich zwischen der besagten wechselbaren Sicherheitsschnittstelle (8) und den Zugangskontrollkarten (6) durchgeführt wird.

31. Wechselbare Sicherheitsschnittstelle (8), die einen nicht-flüchtigen Speicher umfasst und dazu bestimmt ist, einerseits mit einem Empfangsgerät (2) und andererseits mit einer Mehrzahl Kontrollkarten (6) für einen bedingten Zugang zusammenzuarbeiten, um den Zugang zu von einem Betreiber verteilten numerischen Daten zu verwalten, wobei jede Karte (6) eine einmalige Benutzerkennung aufweist und Informationen bezüglich der Zugangsrechte eines Abonnenten zu den besagten numerischen Daten umfasst, wobei die Schnittstelle **dadurch gekennzeichnet ist, dass** sie Folgendes umfasst:
- Mittel zum Speichern der Benutzerkennung jedes externen Sicherheitsmoduls(6, 8), mit dem sie verbunden ist, in Echtzeit,
- Mittel zum Überprüfen, ob eine NBCA-Zahl, die die Höchstzahl zuvor auf das Empfangsgerät (2) übertragener Benutzerkennungen von Karten darstellt, die ein Decoder zu speichern befugt ist, und wobei die Höchstzahl Benutzerkennungen von Karten, die ein Empfangsgerät (2) zu speichern befugt ist, erreicht wird oder nicht
- Mittel zum Verbot des Speicherns, wenn die NCBA-Zahl erreicht ist,
- Mittel zum Zulassen des Speicherns, wenn die NCBA-Zahl nicht erreicht ist.

32. Schnittstelle gemäß Anspruch 31, **dadurch gekennzeichnet, dass** sie aus einer PCMCIA-Karte besteht, die eine Software zum Verwürfeln numerischer Daten umfasst.

33. Schnittstelle gemäß Anspruch 32, **dadurch gekennzeichnet, dass** sie aus einem Softwaremodul besteht.

34. In einem Empfangsgerät (2) ausführbares Computerprogramm, das mit einer Mehrzahl externer Sicherheitsmodule (6, 8) zusammenzuarbeiten vermag, wovon jedes eine einmalige Benutzerkennung aufweist und in denen Informationen bezüglich der Zugangsdaten eines Abonnenten für durch einen Betreiber verteilte numerische Daten gespeichert sind, **dadurch gekennzeichnet, dass** es folgendes umfasst:
- Anweisungen zum Speichern der Benutzerkennung jedes externen Sicherheitsmoduls (6, 8), mit dem sie verbunden ist, in Echtzeit,
- Anweisungen zum Überprüfen, ob eine NBCA-Zahl, die die Höchstzahl zuvor auf das Empfangsgerät (2) übertragener Benutzerkennungen von Karten darstellt, die ein Decoder zu speichern befugt ist, und wobei die Höchstzahl Benutzerkennungen von Karten, die ein Empfangsgerät (2) zu speichern befugt ist, erreicht wird oder nicht,
- Anweisungen zum Verbot des Speicherns, wenn die NCBA-Zahl erreicht ist,
- Anweisungen zum Zulassen des Speicherns, wenn die NCBA-Zahl nicht erreicht ist.

35. Computerprogramm gemäß Anspruch 34, **dadurch gekennzeichnet, dass** es außerdem Anweisungen umfasst, die zum lokalen Erzeugen von Kontrollparametern des Abgleichs des Empfangsgeräts (2) mit dem externen Sicherheitsmodul als Funktion eines durch den Betreiber an das besagte Empfangsgerät (2) gesendeten Signals umfasst.

36. System umfassend eine Mehrzahl von Empfangsgeräten gemäß Anspruch 27, die mit einem Netz zur Übertragung von Daten und/oder Diensten verbunden sind, wobei jedes Empfangsgerät (2) mit einer Mehrzahl externer Sicherheitsmodule (6, 8) abgeglichen werden kann und das besagte System außerdem eine kommerzielle Verwaltungsplattform (1) umfasst, die mit den Empfangsgeräten (2) und mit den besagten externen Sicherheitsmodulen (6, 8) kommuniziert, **dadurch gekennzeichnet, dass** es außerdem Folgendes umfasst:
- ein erstes, in der besagten kommerziellen Verwaltungsplattform (1) angeordnetes Modul, das zum Erzeugen von Abgleichsanfragen bestimmt ist,
- und ein zweites in den Empfangsgeräten (2) angeordnetes Modul, das zum Verarbeiten der besagten Anfragen bestimmt ist, um eine Konfiguration zum Abgleich herzustellen und um den Abgleich zu kontrollieren.

## Claims

1. Method for matching digital data reception equipment (2) with a plurality of external security modules (6, 8) intended to manage access to digital data distributed by an operator each of said external security modules (6, 8) having a unique identifier, method **characterised in that** it comprises the following steps:
- transmitting to the reception equipment (2) a signal including at least one message to manage memorisation of the identifier of the external security module (6, 8) and/or a check phase management message including a number NBCA representing the maximum number of card identifiers that a decoder is authorised to memorise,
- connecting an external security module (6, 8) to the reception equipment,
- memorising the unique identifier of the connected security module (6, 8) in the reception equipment (2), on the fly,
- verifying whether the number NBCA is reached or not,
- If the number NBCA is reached, prohibit memorisation,
- else, authorise memorisation.

2. Method set forth in claim 1, **characterised in that** it also includes a check phase consisting of verifying whether or not the identifier of said module is memorised in reception equipment (2), every time that an external security module (6, 8) is connected to this reception equipment (2) later on.

3. Method set forth in claim 3, **characterised in that** said signal includes at least one of the following set values:
- authorise memorisation,
- prohibit memorisation,
- erase identifiers previously memorised in the reception equipment (2),
- activate or deactivating the check phase.

4. Method set forth in claim 3, **characterised in that** said signal includes a reconfiguration set value through which an updated list of identifiers of external security modules (6, 8) matched with the reception equipment(2) is transmitted to said reception equipment (2).

5. Method set forth in claim 4, **characterised in that** said list is transmitted directly to the reception equipment (2).

6. Method set forth in claim 4, **characterised in that** said list is transmitted through an external security module (6, 8) connected to said reception equipment (2).

7. Method set forth in claim 2, in which said check phase includes a procedure consisting of disturbing the data processing if the identifier of the connected external security module (6, 8) is not previously memorised in the reception equipment (2).

8. Method set forth in claim 1, **characterised in that** said data are distributed without encryption or scrambled by an encrypted control word and **in that** each external security module (6, 8) includes access rights to said data and a decryption algorithm for said control word.

9. Method set forth in one of claim 4 , **characterised in that** said signal is transmitted to a reception equipment (2) in an EMM message specific to an external security module (6, 8) associated with this reception equipment (2).

10. Method set forth in one of claim 4 , **characterised in that** said signal is transmitted to a reception equipment (2) in an EMM message specific to this reception equipment (2).

11. Method set forth in claim 4, **characterised in that** for a given reception equipment (2) said list is transmitted in an EMM message specific to a security module (6, 8) associated with this reception equipment (2).

12. Method set forth in claims 4 or 5, **characterised in that** said signal is transmitted to a group of reception equipment (2) in an EMM message specific to a group of external security modules (6, 8) associated with said reception equipment (2).

13. Method set forth in one of claim 4 , **characterised in that** said signal is transmitted to a group of reception equipment (2) in an EMM message specific to said group of reception equipment (2).

14. Method set forth in claim 4, **characterised in that** for a given group of reception equipment (2), said list is transmitted in an EMM message specific to a group of external security modules (6, 8) associated with said reception equipment (2).

15. Method set forth in one of claim 4 , **characterised in that** said check signal is transmitted in a private flow to a group of reception equipment (2).

16. Method set forth in claim 4, **characterised in that** for a given group of reception equipment (2), said list is transmitted in a private flow to each reception equipment (2).

17. Method set forth in one of claims 16, **characterised in that** said private flow is processed by a dedicated software executable in each reception equipment (2) as a function of the identifier of the external security module (6, 8) associated with it.

18. Method set forth in one of claims 9 to 14, **characterised in that** it also includes a mechanism that prevents the use of an EMM transmitted to the same security module (6, 8) in two distinct items of reception equipment (2).

19. Method set forth in one of claim 18, **characterised in that** said EMM are in the following format:
| | |
|---|---|
| EMM-U_section() { | |
| table_id = 0x88 | 8 bits |
| section_syntax_indicator = 0 | 1 bit |
| DVB_reserved | 1 bit |
| ISO_reserved | 2 bits |
| EMM-U_section_length | 12 bits |
| unique_adress_field for (i=0; i<N; i++) { | 40 bits |
| EMM_data_byte | 8 bits |
| } | |
| } | |

20. Method set forth in one of claims 12 to 14, **characterised in that** said EMM is specific to all external security modules (6, 8) or to all reception equipment (2) and are in the following format:
| | |
|---|---|
| EMM-G_section() { | |
| table_id = 0x8A or 0x8B | 8 bits |
| section syntax indicator = 0 | 1 bit |
| DVB_reserved | 1 bit |
| ISO reserved | 2 bits |
| EMM-G_section_length | 12 bits |
| for (i=0; i<N; i++) { | |
| EMM_data_byte | 8 bits |
| } | |
| } | |

21. Method set forth in one of claims 12 to 14, **characterised in that** said EMM is specific to a sub-group of external security modules (6, 8) or reception equipment (2) and are in the following format:
| | |
|---|---|
| EMM-S_section() { | |
| table id = 0x8E | 8 bits |
| section_syntax_indicator = 0 | 1 bit |
| DVB reserved | 1 bit |
| ISO reserved | 2 bits |
| EMM-S_section_length | 12 bits |
| shared address field | 24 bits |
| reserved | 6 bits |
| data_format | 1 bit |
| ADF_scrambling_flag | 1 bit |
| for (i=0; i<N; i++) { | |
| EMM_data_byte | 8 bits |
| } | |
| } | |

22. Method set forth in claim 1, **characterised in that** identifiers of external security modules (6, 8) are grouped in an encrypted list.

23. Method set forth in any one of claims 1 to 22, **characterised in that** the reception equipment (2) includes a decoder and the external security module (6, 8) includes an access control card (6) in which information about access rights of a subscriber to digital data distributed by an operator is memorised, and **in that** matching is done between said decoder and said card (6).

24. Method set forth in any one of claims 1 to 22, **characterised in that** the reception equipment (2) includes a decoder and the external security module (6, 8) includes a removable security interface (8) provided with a non-volatile memory that can cooperate firstly with the decoder, and secondly with a plurality of conditional access control cards (6) to manage access to digital data distributed by an operator, and **in that** matching is done between said decoder and said removable security interface (8).

25. Method set forth in any one of claims 1 to 22, **characterised in that** the reception equipment (2) includes a decoder provided with a removable security interface (8) with a non-volatile memory that can cooperate firstly with said decoder, and secondly with a plurality of conditional access control cards (6), and **in that** matching is done between said removable security interface (8) and said access control cards (6).

26. Method set forth in claim 8, **characterised in that** the data are audiovisual programs.

27. Reception equipment (2) that can be matched with a plurality of external security modules (6, 8) intended to manage access to digital data distributed by an operator each of said external security modules (6, 8) having a unique identifier, **characterised in that** it includes:
- means for memorising the identifier of each external security module (6, 8) connected to it, on the fly,
- means for verifying whether a number NBCA representing the maximum number of card identifiers previously transmitted to the reception equipment (2) and that a decoder is authorised to memorise is reached or not,
- means for prohibiting the memorisation if the number NBCA is reached,
- means for authorizing the memorisation if the number NBCA is not reached.

28. Equipment set forth in claim 27, **characterised in that** it comprises a decoder and **in that** the external security module (6, 8) is an access control card (6) containing information about access rights of a subscriber to said digital data, matching being done between said decoder and said card (6).

29. Equipment set forth in claim 28, **characterised in that** it includes a decoder and **in that** the external security module (6, 8) is a removable security interface (8) provided with a non-volatile memory and that is designed to cooperate firstly with said decoder, and secondly with a plurality of conditional access control cards (6), to manage access to said digital data, matching being done between said decoder and said removable security interface (8).

30. Equipment set forth in claim 27, **characterised in that** it includes a decoder provided with a removable security interface (8) with a non-volatile memory and that is designed to cooperate firstly with said decoder and secondly with a plurality of conditional access control cards (6) and **in that** matching is done between said removable security interface (8) and said access control cards (6).

31. Removable security interface (8) including a non-volatile memory and designed to cooperate firstly with a reception equipment (2), and secondly with a plurality of conditional access control cards (6), to manage access to digital data distributed by an operator, each card (6) having a unique identifier and containing information about access rights of a subscriber to said digital data, interface **characterised in that** it includes;
- means of recording the identifier of each access control card (6) in said non-volatile memory, on the fly.
- means for verifying whether a number NBCA representing the maximum number of card identifiers previously transmitted to the reception equipment (2) and that a decoder is authorised to memorise is reached or not,
- means for prohibiting the memorisation if the number NBCA is reached,
- means for authorizing the memorisation if the number NBCA is not reached.

32. Interface set forth in claim 31, **characterised in that** it consists of a PCMCIA card on which digital data descrambling software is installed.

33. Interface set forth in claim 32, **characterised in that** it consists of a software module.

34. Executable computer program in a reception equipment (2) that can cooperate with a plurality of external security modules (6, 8) each having a unique identifier and in which information about access rights of a subscriber to digital data distributed by an operator are stored, **characterised in that** it includes:
- instructions to memorise the identifier of each external security module (6, 8) connected to said reception equipment (2), on the fly;
- instructions for verifying whether a number NBCA representing the maximum number of card identifiers previously transmitted to the reception equipment (2) and that a decoder is authorised to memorise is reached or not,
- instructions for prohibiting the memorisation if the number NBCA is reached,
- instructions for authorizing the memorisation if the number NBCA is not reached.

35. Computer program set forth in claim 34, **characterised in that** it also includes instructions to locally generate matching control parameters of the reception equipment (2) with an external security module (6, 8) as a function of a signal transmitted to said reception equipment (2) by the operator.

36. System including a plurality of reception equipment (2) connected to a data and/or services broadcasting network, each reception equipment (2) being capable of being matched with a plurality of external security modules (6, 8), said system also including a commercial management platform (1) communicating with the reception equipment (2) and with said external security modules (6, 8) **characterised in that** it also includes:
- a first module arranged in said commercial management platform (1) and that will generate matching queries,
- and a second security module arranged in said reception equipment (2) that will process said queries to prepare a matching configuration and to control matching.
